# EUROPÄISCHE PATENTSCHRIFT

(11) **EP 1 769 896 B1**
(45) Veröffentlichungstag und Bekanntmachung des Hinweises auf die Patenterteilung: **18.06.2008**
(21) Anmeldenummer: 06024251.8
(22) Anmeldetag: 14.04.2004
(51) Int. Cl.: B29C 45/00, B29C 45/16, F16B 21/02, F16B 19/10

(54) **Verbindungssystem**
Connection system
Attache

(30) Priorität: 30.04.2003 DE 10319756
(43) Veröffentlichungstag der Anmeldung: 04.04.2007
(62) Teilanmeldung aus: 04727242.2
(73) Patentinhaber: A. RAYMOND ET CIE, 38000 Grenoble (FR)
(72) Erfinder: Legat, Jean-Jacques, 38690 Colombe (FR); Blanc, Jérôme, 38950 Saint Martin le Vinoux (FR)
(74) Vertreter: Rüttgers, Joachim

(56) Entgegenhaltungen:
- DE-A- 19 920 689
- US-A- 5 551 817
- US-A- 5 647 713
- US-A1- 2002 185 778
- THOMA H: "RATIONALISIEREN DURCH MEHRKOMPONENTEN-SPRITZGIESSEN" KUNSTSTOFFE, CARL HANSER VERLAG. MUNCHEN, DE, Bd. 78, Nr. 8, August 1988 (1988-08), Seiten 665-669, XP001173613 ISSN: 0023-5563

## Beschreibung

Die Erfindung betrifft ein Verbindungssystem gemäß dem Oberbegriff des Patentanspruches 1.

Ein derartiges Befestigungssystem ist aus US-A-5,551,817 bekannt. Dieses Verbindungssystem verfügt über ein inneres Kunststoffteil und über ein äußeres Kunststoffteil, die funktional relativ zueinander drehbeweglich sind. Das innere Kunststoffteil ist als ein Anker ausgebildet, der über elastisch aufgespreizte Flügel, die an der Unterseite einer Scheibe ausgebildet sind, verfügt, wobei auf ihm eine Kappe verdrehbar ist.

Aus dem Artikel von H. Thoma, "Rationalisieren durch Mehrkomponenten-Spritzgießen", Kunststoffe, Karl-Hanser-Verlag, München, Deutschland, Band 78, Nr. 8, August 1988 (988-08, Seiten 665 bis 669, XP001173613 ISSN: 0023-5563), ist bekannt, ein äußeres Kunststoffteil und ein inneres Kunststoffteil aus verschiedenen Kunststoffmaterialien herzustellen, damit diese nicht aneinander haften.

Der Erfindung liegt die Aufgabe zugrunde, ein Verbindungssystem der eingangs genannten Art anzugeben, bei dem praktisch keine Gefahr besteht, dass Verunreinigungen in das Gewinde eindringen können.

Diese Aufgabe wird bei einem Verbindungssystem der eingangs genannten Art erfindungsgemäß mit den kennzeichnenden Merkmalen des Patentanspruches 1 gelöst.

Durch die erfindungsgemäße Ausgestaltung des Befestigungssystems ist durch den Eingriff der Gewinde eine gute Schutzwirkung gegen Verunreinigung erzielt. Bei der Herstellung dient der Stiel des Ankers als Gusskern für die Kappe.

Die Erfindung wird im folgenden anhand der anhängenden Zeichnung beispielhaft näher beschrieben. Es zeigen:
- Fig. 1: eine perspektivische Darstellung eines Verbindungssystems (nicht Gegenstand der beanspruchten Erfindung),
- Fig. 2: eine perspektivische Darstellung des Ankerteils des Verbindungssystems nach Fig. 1,
- Fig. 3: die Ansicht auf die Breitseite des Ankerteils nach Fig. 2,
- Fig. 4: die Ansicht auf die Schmalseite des Ankerteils nach Fig. 2,
- Fig. 5: eine perspektivische Darstellung des Zapfenteils des Verbindungssystems nach Fig. 1,
- Fig. 6: eine Seitenansicht des Zapfenteils nach Fig. 5,
- Fig. 7: eine gegenüber Fig. 6 um 90° gedrehte Seitenansicht des Zapfenteils nach Fig. 5,
- Fig.8: eine erste perspektivische Darstellung eines erfindungsgemäßen Verbindungssystems,
- Fig. 9: eine zweite perspektivische Darstellung des Verbindungssystems nach Fig.8,
- Fig. 10: eine erste Seitenansicht des Verbindungssystems nach Fig. 8,
- Fig. 11: eine gegenüber Fig. 10 um 90° gedrehte Seitenansicht des Verbindungssystems nach Fig. 8 und
- Fig. 12: in drei Einzeldarstellungen Arbeitsschritte für das erstmalige Herstellen und das Lösen einer Verbindung mit Hilfe eines Verbindungssystems nach Fig. 8.

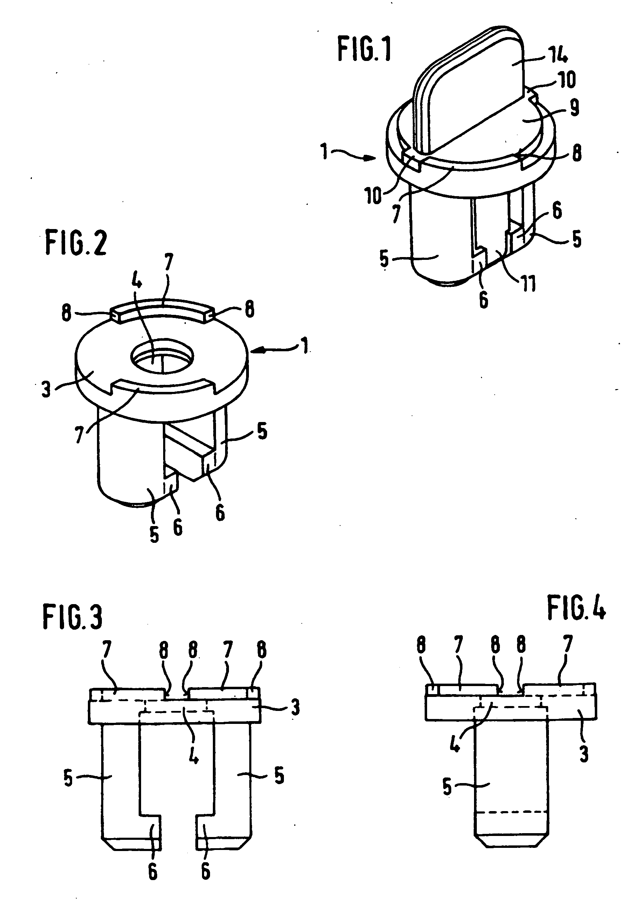

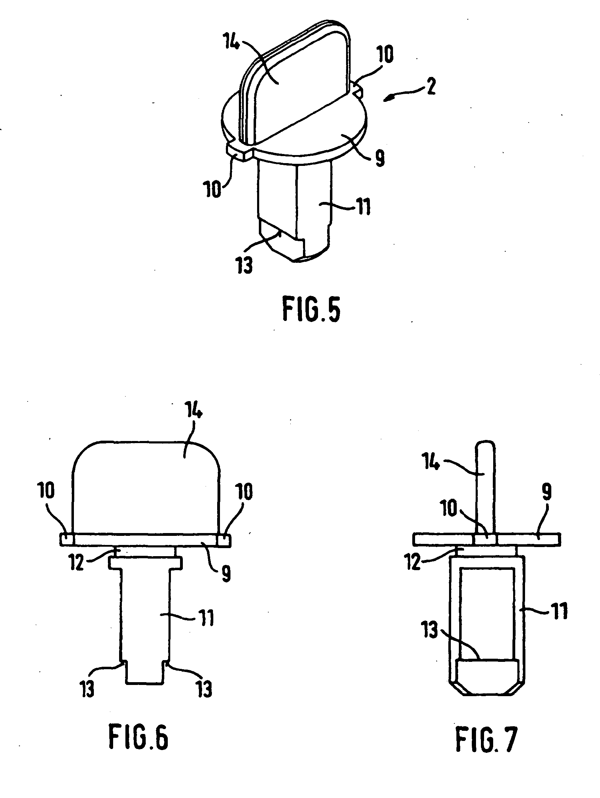

Fig. 1 zeigt ein Ausführungsbeispiel eines Verbindungssystems (nicht Gegenstand der beanspruchten Erfindung), das nach einem weiter unten erläuterten Verfahren herstellbar ist. Es besteht aus einem Ankerteil **1** und einem Zapfenteil **2,** das mit dem Ankerteil **1** eine geschlossene Einheit bildet derart, dass es nach außen einstückig erscheint und bei seiner Anwendung auch so zu handhaben ist. Wie aus den Fig. 2 bis 4 deutlicher zu ersehen ist, besteht das Ankerteil **1** aus einer mit einer zentrischen, kreisrunden Öffnung **4** versehenen Scheibe **3,** von der nach unten und nach innen versetzt zwei, einander gegenüberstehende Klauen **5** abragen, die an ihren freien Enden jeweils einen nach innen weisenden Ansatz **6** aufweisen. An der Oberseite der Scheibe **3** sind, einer Kreislinie folgend, zwei einander gegenüberliegende Fortsätze **7** angeformt, die an ihren jeweiligen Enden Anschläge **8** bieten. Das Zapfenteil **2** besteht, wie aus den Fig. 5 bis 7 ersichtlich, aus einer kreisrunden Platte **9,** von der seitlich diametral zwei Stopper **10** abragen. Aus der Mitte der Platte **9** ragt nach unten der Zapfen **11** ab. Dieser hat einen rechteckigen Querschnitt und ist über einen kreisrunden, hinterschnittenen Halsabschnitt **12** mit der Platte **9** verbunden; sein freies Ende weist an den Breitseiten Abstufungen **13** auf. An der Oberseite der Platte **9** ist ein Drehgriff **14** angeformt.

Wie in Fig. 1 zu erkennen, sind das Ankerteil **1** und das Zapfenteil **2** so miteinander verbunden, dass sich der Zapfen **11** des Zapfenteils **2** zwischen den Klauen **5** des Ankerteils **1** befindet und die Platte **9** auf der Scheibe **3** aufliegt. Der kreisrunde Halsabschnitt **12** befindet sich innerhalb der kreisrunden Öffnung **4.** So lässt sich das Zapfenteil **2** mit Hilfe des Drehgriffs **14** in zwei um 90° versetzte Stellungen drehen. Die Drehung wird durch den Anschlag der vom Zapfenteil **2** seitlich abragenden Stopper **10** an den Anschlagsflächen **8** der teilringförmigen Fortsätze **7** des Ankerteils **1** in beiden Richtungen begrenzt. In der einen dieser Stellungen, die man als Grundstellung bezeichnen kann, sitzt der Zapfen **11** mit seinen seitlichen Abstufungen **13** auf den Ansätzen **6** der Klauen **5** auf, die Schmalseite des abgestuften Endes des Zapfens **2** füllt den Abstand zwischen den Ansätzen **6** der Klauen **5** nahezu aus. Wird das Zapfenteil **2** innerhalb der Öffnung **4** des Ankerteils **1** um 90° gedreht, so gelangt die Breitseite des abgestuften Zapfenendes zwischen die Ansätze **6** der Klauen 5, wodurch letztere aufgespreizt werden.

Bei der Anwendung des Verbindungssystems wird dieses in seiner Grundstellung mit den Klauen **5** und dem zwischen ihnen eingeschlossenen Zapfen **11** in die aufeinander ausgerichteten Verbindungslöcher der zu verbindenden Bauteile eingesetzt, anschließend wird das Zapfenteil **2** um 90° gedreht und mit der dabei erfolgenden Spreizung der Klauen 5 die Verbindung vollzogen und verriegelt.

Um die Verbindung wieder zu lösen, wird das Zapfenteil **2** um 90° in seine Grundstellung zurückgedreht, so dass die Klauen **5** elastisch in die Grundstellung zurückkehren können und das Verbindungssystem am Drehgriff **14** aus den Verbindungslöchern herausgezogen werden kann. Das Verbindungssystem bleibt dabei völlig unbeschädigt und unverändert für die Herstellung einer neuen oder anderen Verbindung einsetzbar.

Das Verbindungssystem wird als Ganzes, so wie es in Fig. 1 dargestellt ist, nach einem Spritzgussverfahren hergestellt, das als Abformung oder Über-Spritzgussverfahren bezeichnet werden kann. Wesentlich ist dabei, dass für die beiden relativ zueinander verdrehbaren Einzelteile, hier also das Ankerteil **1** und das Zapfenteil **2,** zwei verschiedene Kunststoffmaterialien verwendet werden, die zueinander nicht adhärent sind. Es wird dabei zunächst das innere Teil, hier das Zapfenteil **2,** in einer Form aus dem einen Material gegossen. Nach dem Erstarren dieses inneren Teils (Zapfenteils **2**) wird in einem zweiten Arbeitsgang das äußere Teil, hier das Ankerteil **1,** aus dem anderen Material, das zum ersten nicht adhärent bzw. nicht anhaftend ist, über das erste oder um das erste Teil herumgegossen, wobei das erste Teil den Gusskern für das zweite Teil bildet. Die gegenseitige Verdrehbarkeit der beiden Teile wird dabei durch die Wahl der Materialien, d.h. durch deren Eigenschaft, nicht aneinander anzuhaften gewährleistet. Außerdem müssen die Materialien für die beiden Teile so gewählt werden, dass sie die für ihre Funktion richtige Eigenschaft haben. Das Ankerteil **1** wird aus einem vergleichsweise weichen, elastischen Material hergestellt, das eine Verformung bzw. die Spreizung der Klauen **5** und somit die Verankerung des Verbindungssystems in der Verbindungsstelle zulässt; die Spreizung muss sich aber auch wieder zurückbilden können, wenn die Spreizkraft aufgehoben wird. Für das Zapfenteil **2** wird ein steifes Material gewählt, damit der Zapfen **11** diese Spreizkraft auf die Klauen **5** wirkungsvoll ausüben kann.

Nach dem beschriebenen Verfahren werden also nicht mehr separate Teile gegossen, die anschließend in einem vorbereitenden Arbeitsgang für ihre Verwendung oder unmittelbar bei ihrer Verwendung erst zusammengefügt werden müssen, sondern es entsteht direkt beim Gießen oder Spritzgießen die fertige, sofort einsatzfähige Einheit. Die den Einsatz vorbereitende Arbeit des Zusammenfügens wird eingespart, der Einsatz selbst erleichtert und beschleunigt.

Die mechanische Haltbarkeit oder Festigkeit einer mit dem Verbindungssystem hergestellten Verbindung hängt stark ab von der Form des Ankerteils **1** bzw. deren Klauen **5,** die diese unterhalb der zu verbindenden Bauteile annehmen oder aufweisen. Es lassen sich die verschiedensten Formen für das Ankerteil **1** oder auch für das Zapfenteil **2** entwickeln und nach dem beschriebenen Verfahren herstellen, um die Haltbarkeit oder Festigkeit der durch die Verformung am Ankerteil **1** erreichten Verbindung zu gewährleisten oder zu verbessern.

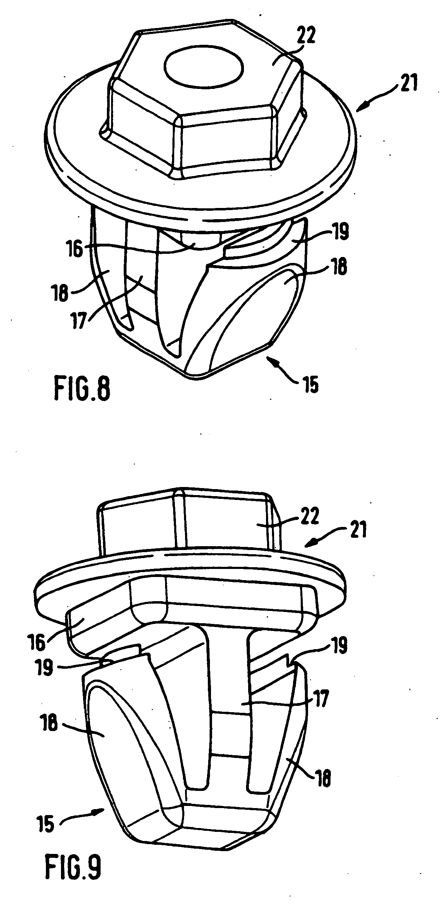

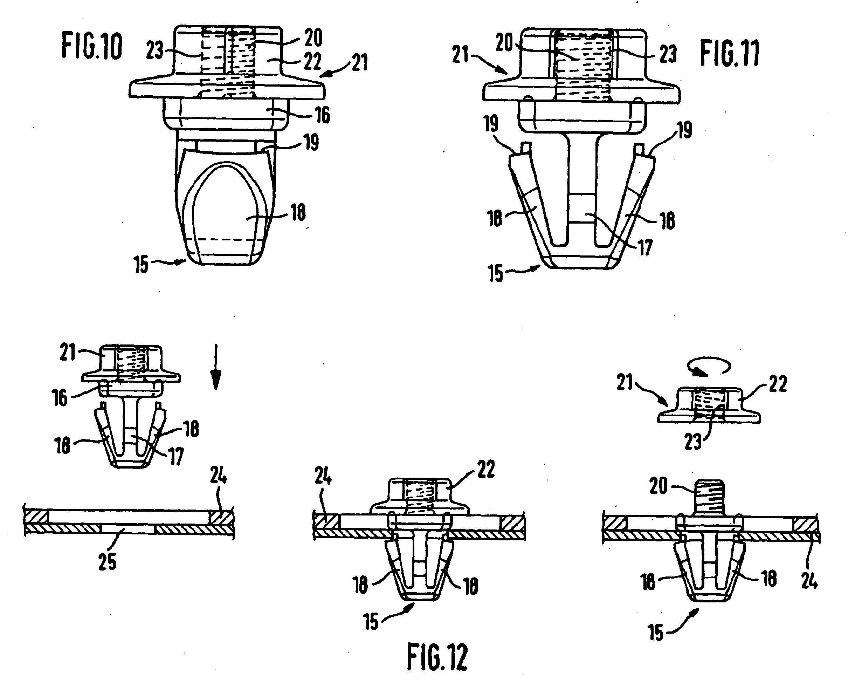

Die Fig. 8 bis 11 zeigen ein erfindungsgemäßes Verbindungssystem, das ebenfalls aus zwei zueinander verdrehbaren Teilen besteht und nach demselben Verfahren herstellbar ist. Der Anker **15** besteht hier aus einer rechteckigen Scheibe **16,** von der nach unten ein flacher Dorn **17** abragt. Vom Ende dieses Dorns **17** erstrecken sich zwei Flügel **18** aufspreizend in Richtung auf die Scheibe **16.** An den freien Enden der Flügel **18** ist jeweils eine Abstufung **19** vorgesehen. An der Oberseite der Scheibe **16** ist in der Mitte ein kurzer Stiel **20** mit Außengewinde angeformt (siehe dazu auch Fig. 12). Eine Kappe **21** mit Drehknopf **22** weist ein mittiges Sackloch **23** mit Innengewinde auf; so ist die Kappe **21** auf dem Stiel **20** drehbar.

Auch dieses Verbindungssystem wird nach dem oben beschriebenen Verfahren hergestellt. Zunächst wird in einer Form der Anker **15** gegossen und nach dem Erstarren des Ankers **15** die Kappe **21** über den Stiel **19** bzw. um ihn herum gegossen, wobei der Stiel **19** mit Außengewinde den Gusskern bildet, so dass sich von selbst in der Kappe **21** das Sackloch **23** mit Innengewinde bildet. Wiederum werden Anker **15** und Kappe **21** aus zwei verschiedenen Materialien gegossen, die zueinander nicht adhärent sind, so dass die Verdrehbarkeit der Kappe **21** auf dem Stiel **19** gewährleistet ist. Das Material für den Anker **15** ist dabei so zu wählen, dass die beiden von der Spitze des Dorns **17** ausgehenden Flügel **18** sich elastisch biegen lassen. Anker **15** und Kappe **21** werden nicht als separate Teile hergestellt, die zusammengeschraubt werden müssten, sondern das Verbindungssystem verlässt auch hier das Herstellungsverfahren als fertige Einheit.

In Fig. 12 ist in drei Einzeldarstellungen die Anwendung dieses Verbindungssystems dargestellt. Im ersten Bild sind zunächst zwei plattenförmige Bauteile **24** mit durchgehenden Verbindungslöchern **25,** die aufeinander zu erkennen. In dem dargestellten, speziellen Fall soll später das obere Bauteil lateral zum unteren Bauteil bewegt werden können, weshalb das Verbindungsloch **25** des oberen Bauteils als Langloch ausgebildet ist. Das Verbindungssystem wird, so wie es aus der Fertigung kommt, in Pfeilrichtung von oben in die Verbindungslöcher **25** ein- und soweit durchgeschoben, bis die Scheibe **16** aufsitzt. Dabei werden die von der Spitze des Dorns **17** ausgehenden Flügel **18** zunächst elastisch aufeinander zugebogen, um sich beim Durchdringen der Verbindungslöcher **25** wieder zu spreizen und das untere Bauteil **24** mit ihren Abstufungen **19** zu untergreifen, wie es im zweiten Bild zu sehen ist. Im speziellen Fall kommt dabei die Kappe **21** mit ihrem Rand an den Längskanten des Langlochs **25** im oberen Bauteil **24** zur Auflage. Durch Drehen der Kappe **21** wird die Verbindung festgezogen. Wenn die Scheibe **16** des Verbindungssystems rechteckig ausgebildet ist, können deren Seitenflächen bei der möglichen Lateralbewegung vorteilhaft als Führung im Langloch **25** dienen.

Um die Verbindung bei Bedarf zu lösen, wird, wie im dritten Bild gezeigt, lediglich die Kappe **21** vom Stiel **20** abgeschraubt. Danach kann das obere Bauteil bequem nach oben abgehoben werden. In umgekehrter Weise lässt sich danach die Verbindung ebenso bequem und einfach auch wieder herstellen. Das Verbindungssystem bleibt intakt und wiedereinsetzbar.

## Patentansprüche

1. Verbindungssystem mit wenigstens einem inneren Kunststoffteil und mit einem äußeren Kunststoffteil, die funktional relativ zueinander drehbeweglich sind, wobei das innere Kunststoffteil ein mit elastisch aufgespreizten Flügeln, die an der Unterseite einer Scheibe ausgebildet sind, und mit einem von der Oberseite abragenden Stiel **(20)** ausgebildeter Anker **(15)** ist, auf dem eine Kappe **(21)** verdrehbar ist, **dadurch gekennzeichnet, dass** die Kunststoffteile aus verschiedenen Kunststoffmaterialien hergestellt sind, wobei das innere Kunststoffteil oder zumindest ein Teil davon der Kern für das äußere Kunststoffteil ist und die beiden Kunststoffmaterialien nicht adhärent oder aneinander haftend sind, und dass der vom Anker **(15)** abragende Stiel **(20)** mit einem Außengewinde versehen ist und die Kappe **(21)** ein Sackloch **(23)** mit Innengewinde aufweist.

## Claims

1. Connecting system having at least one inner plastics part and having one outer plastics part, which plastics parts are movable in rotation relative to one another for functional purposes, the inner plastics part being an anchor (15) which is formed to have flaps which are spread apart elastically and which are formed on the underside of a planar part, and to have a column (20) projecting from the upper side, on which anchor (15) a cap (21) is rotatable, **characterised in that** the plastics parts are made of different plastics materials, the inner plastics part, or at least a part thereof, being the core for the outer plastics part and the two plastics materials not being adherent or mutually cohesive, and **in that** the column (20) projecting from the anchor (15) is provided with an outside thread and the cap (21) has a blind hole (23) having an inside thread.

## Revendications

1. Système d'assemblage se composant d'au moins un élément en matière plastique intérieur et un élément en matière plastique extérieur qui, en vertu de leur principe de fonctionnement, sont destinés à tourner l'un par rapport à l'autre, l'élément intérieur en matière plastique constituant en l'occurrence un élément d'ancrage (15) muni d'ailettes en position déployée, qui sont prévues au niveau de la face inférieure d'un disque, et d'une tige montante (20) faisant saillie depuis la face supérieure, sur lequel un capuchon (21) est monté avec la possibilité de tourner, **caractérisé en ce que** les éléments en matière plastique sont fabriqués dans des matières plastiques différentes, l'élément en matière plastique intérieur, ou au moins une portion de celui-ci, constituant en l'occurrence le noyau pour l'élément en matière plastique extérieur et les deux matières plastiques n'ayant pas de propriété d'adhérence ou ne faisant pas preuve d'adhérence l'une vis-à-vis de l'autre et **en ce que** la tige montante (20) faisant saillie depuis l'élément d'ancrage (15) est munie d'un filetage extérieur et que le capuchon (21) comporte un trou borgne (23) muni d'un filetage intérieur.
